# EUROPÄISCHE PATENTSCHRIFT

(11) **EP 2 050 517 B1**
(45) Veröffentlichungstag und Bekanntmachung des Hinweises auf die Patenterteilung: **20.06.2012**
(21) Anmeldenummer: 08013424.0
(22) Anmeldetag: 25.07.2008
(51) Int. Cl.: B09C 1/00, B09C 1/08, B09B 3/00, C02F 11/00, C04B 14/36, C04B 28/04

(54) **Verfahren zum Aufbereiten von kontaminiertem mineralischen Gewässersediment- oder Bodenmaterial**
Method for processing contaminated mineral water sediment or soil material
Procédé de traitement de matériau de sédiment d'eau ou de sol minéral contaminé

(30) Priorität: 26.07.2007 DE 102007035054
(43) Veröffentlichungstag der Anmeldung: 22.04.2009
(73) Patentinhaber: INFRASOIL-SYSTEMS GmbH, 28203 Bremen (DE)
(72) Erfinder: Hartmann, Volker, 27321 Thedinghausen (DE); Hilmer, Uwe, 29525 Uelzen (DE)
(74) Vertreter: Philipp, Matthias

(56) Entgegenhaltungen:
- EP-A2- 0 500 199
- EP-A2- 0 756 904
- DE-A1- 19 936 324

## Beschreibung

Die Erfindung betrifft ein Verfahren zum Aufbereiten von kontaminiertem mineralischen Gewässersediment- oder Bodenmaterial zu einem mineralischen Baustoff für erdbautechnische Zwecke, der oberhalb oder unterhalb des Wasserspiegels eingesetzt werden kann.

Böden oder auch Gewässersedimente, die häufig auch als Schlick bezeichnet werden, wie sie insbesondere bei Baggerarbeiten in Hafenbecken, Fahrrinnen und dergleichen anfallen, können durch Schadstoffe belastet sein, bei denen es sich meist überwiegend um komplexgebundene Schwermetallionen und/oder andere häufig äußerst schädliche organische Verbindungen unterschiedlichster chemischer Art handelt. Dies hat zur Folge, daß man bei Baggerarbeiten oder dergleichen anfallende Böden oder Gewässersedimente keinesfalls auf Halden deponieren kann, wie dies früher üblich war und auch heute noch in nicht unerheblichem Ausmaße geschieht, da die enthaltenen Schadstoffe im Verlaufe der Zeit durch Auswaschung ins Grundwasser gelangen und dieses belasten können.

Es kommt hinzu, daß anfallende Böden oder Gewässersedimente, selbst wenn sie in Trocknungsfeldem zwischengelagert und durch Verdunstung entwässert werden, die notwendigen Kriterien einer Verarbeitung als Baustoffe oder Deponierfähigkeit in bodenmechanischer Hinsicht in bezug auf Stand- und Dauerfestigkeit, Befahrbarkeit usw. regelmäßig nicht erfüllen.

Aufgrund der genannten negativen Eigenschaften scheiden häufig in erheblichen Mengen anfallende Gewässersedimente aus den gleichen Gründen und bei gleicher Aufarbeitung durch Entwässerung ersichtlich als Baustoff, beispielsweise für Erd- und Straßenbaumaterial, aus, weil sie auch bei einer solchen Verwendung die gleichen negativen Wirkungen entfalten und/oder nicht die erforderlichen Festigkeitseigenschaften aufweisen.

Aus der EP 0 500 199 A2 ist ein Verfahren zum Aufbereiten von kontaminiertem mineralischen Gewässersediment- oder Bodenmaterial bekannt. gemäß dem Oberbegriff des Anspruchs 1.

Aus der EP 0756904 A2 ist die Verwendung von organophilem Bentonit zur Aufbereitung von kontaminiertem Boden bekannt.

Die DE 199 36 324 A1 offenbart die Verwendung von Harnstoff als Zusatzmaterial zur Behandlung mineralischer kontaminierter Massen.

Der vorliegenden Erfindung liegt daher die Aufgabe zugrunde, ein Verfahren zu schaffen, mit dem kontaminierte Böden oder Gewässersedimente zu einem mineralischen Baustoff aufbereitet werden können, der für erdbautechnische Zwecke oberhalb oder unterhalb des Wasserspiegels verwendet werden kann, d. h. sowohl über als auch unter Wasser eingesetzt werden kann, und der eine ausreichende mechanische Festigkeit aufweist.

Diese Aufgabe wird erfindungsgemäß durch ein Verfahren nach Anspruch 1 gelöst.

Durch Zugabe von organophilem Bentonit werden insbesondere Verunreinigungen durch Kohlenwasserstoffe gebunden. Harnstoff bindet besonders Schwermetalle wie Kupfer und Zink. Dadurch können auch hoch belastete Ausgangsstoffe immobilisiert werden. Das Bindemittel bewirkt eine Stabilisierung des Materials, so daß ein tragfähiger Baustoff mit dichtenden und tragenden Eigenschaften entsteht.

Es können 20 Gew.% bis 40 Gew.% Gesteinkörnung zugegeben werden.

Es kann vorgesehen sein, daß die Gesteinkörnung eine Korngrößenverteilung aufweist, die innerhalb eines Sieblinienbands mit folgenden Massenanteilen liegt: 0% bis 1 % bis 2 mm Korngröße; 0% bis 12% bis 3 mm Korngröße; 0% bis 35% bis 4 mm Korngröße; 0% bis 90% bis 5 mm Korngröße; 0 bis 96% bis 6 mm Korngröße; 0,5% bis 97% bis 8 mm Korngröße; 5% bis 100% bis 10 mm Korngröße; 95% bis 100% bis 16 mm Korngröße; 99% bis 100% bis 20 mm Korngröße.

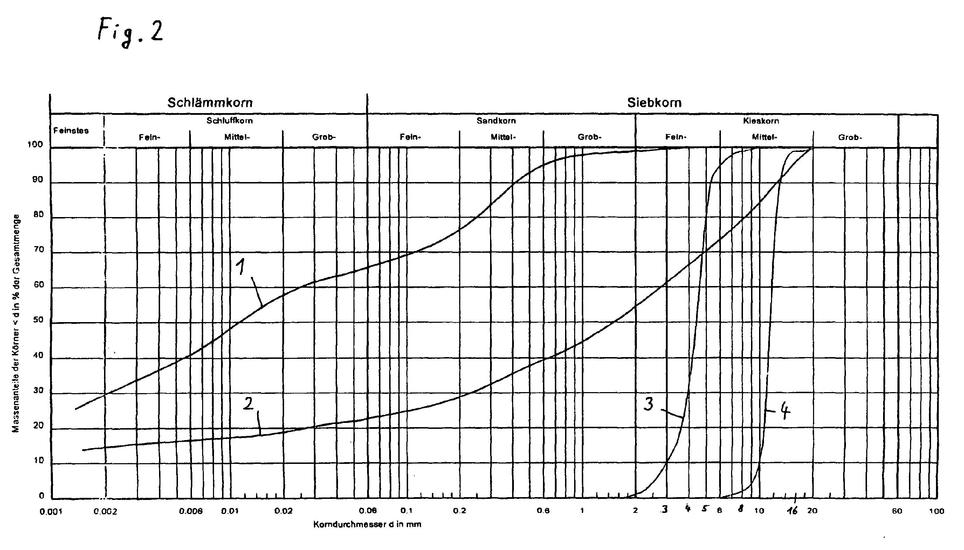

Die Gesteinskörnung kann Rundkorn und/oder Brechkorn und/oder Recyclingmaterial enthalten. Fig. 2 zeigt entsprechende Sieblinien (Kurven 3, 4).

Es kann vorgesehen sein, daß die Gesteinskörnung abgestuft ist und 90 - 95 Gew.-% Körnung 2/8 mm und 5-10 Gew.-% Körnung 8/16 mm enthält. Unter der Angabe "Körnung 2/8" wird vorliegend insbesondere ein Material verstanden, dessen Korngröße zwischen 2 und 8 mm beträgt, wobei der Anteil von Unterkorn maximal 5 Gew.-% und der Anteil von Überkorn maximal 10 Gew.-% beträgt. Entsprechend gilt für die Angabe "Körnung 8/16 mm" eine korngröße zwischen 8 und 16 mm mit einem Anteil an Unterkorn von maximal 5 Gew.-% und einem Anteil an Überkorn von maximal 10 Gew.%. Fig. 2 zeigt entsprechende Sieblinien (Kurven 3, 4).

Die Zugabe von Gesteinskörnung zu dem aufzubereitendem Gewässersediment- oder Bodenmaterial hat den Zweck, in dem gemischten, aufbereiteten Material eine bestimmte Korngrößenverteilung zu erzielen, die innerhalb eines vorgegebenen Sieblinienbands liegt, wie es in Anspruch 1 definiert ist, da der Baustoff nur dann die gewünschten mechanischen Eigenschaften (Festigkeit, Befahrbarkeit) erhält. Das das Gewässersediment- oder Bodenmaterial meist eine relativ feine Kornverteilung aufweist (Schlämmkorn), kann die gewünschte Korngrößenverteilung durch Zugabe von Sandkorn und ggf. Kieskorn erreicht werden.

Bezüglich des Tonmehls, welches zu 10 - 75% aus Kaolinit und zu 5 - 25% aus Quarzit bestehen kann, hat sich gezeigt, daß dieses vorteilhafterweise nicht quellfähig ist, wobei diese natürliche Eigenschaft dem feinkörnigen Kaolinit eine kristallchemische Stabilität und geochemische Resistenz verleiht. Durch die nicht vorhandene Möglichkeit eines innerkristallinen Quellens kann demgemäß keine Ionendiffusion stattfinden.

Es hat sich bspw. gezeigt, daß die für Abdichtungsmaßnahmen erforderlichen k_{f}-Werte von 10⁻¹⁰ m/s bei Verwendung von kaolinitischem Ton(mehl) ohne weiteres erreicht werden, und daß die hiermit hergestellten Massen weiterhin eine Restplastizität besitzen, um bspw. einem Setzungsdruck ohne Rißbildung nachgeben zu können.

Auf den hydratsbeladenen Plättchenoberflächen der Kaolinite findet keine nennenswerte Korrosion statt. Lediglich an den Kornrändern kann es zu einem Ionenaustausch und Absorptionen kommen. Die durch Fällungsreaktionen entstehenden Produkte werden sowohl im amorphen Zustand erstarren als auch in feinstkörniger Form in den feinen Poren abgeschieden. Durch das ungeregelte Wachstum dieser Porenzemente wird die Durchlässigkeit (k_{f}-Wert) der konditionierten Materialien weiter herabgesetzt sowie die Langzeitstabilität gewährleistet bzw. erhöht.

Durch Absorption organischer Verbindungen wird die Stabilität ebenfalls nicht beeinträchtigt. Organische Bestandteile in den Ausgangsmaterialien bis ca. 20% haben aufgrund der spezifischen Eigenschaften der kaolinitischen Tonmehle keine negativen Auswirkungen auf die Langzeitstabilität.

Bevorzugt ist vorgesehen, daß das Ausgangsmaterial mit 2 % Tonmehl, 0,2 % organophilem Bentonit, 2 % Harnstoff, 25 % hydraulischem Bindemittel und 25 % Gesteinskörnung vermischt wird.

Vorteilhafterweise enthalten die Böden bzw. Gewässersedimente maximal 50 Gew.-% Sand.

In einer Ausgestaltung der Erfindung erfolgt eine Verwendung eines zumindest weitgehend karbonatfreien kaolinitischen Tonmehls.

Bevorzugt ist vorgesehen, daß ein Tonmehl mit einer Mahlfeinheit bis ca. 1,5 mm verwendet wird, wobei bevorzugt mindestens ein Kornanteil von ca. 70% bis 0,002 mm Größe vorhanden ist, also einem sehr erheblichen höchstfeinen Kornanteil.

Zweckmäßigerweise werden die Gewässersedimente vor dem Vermischen belüftet, und zwar bevorzugt beim Zerkleinern.

Es hat sich weiterhin als höchst zweckmäßig herausgestellt, wenn die bei der Aufbereitung erhaltene Mischung, unabhängig davon, ob den aufzubereitenden Gewässersedimenten nur organophiler Bentonit oder Harnstoff oder beides homogen zugemischt worden ist, vor einer Weiterverarbeitung als Baustoff zwischengelagert wird, und zwar vorzugsweise wenigstens einen Tag, wobei das insoweit aufbereitete Gut bei der Zwischenlagerung vor Witterungseinflüssen und insbesondere Niederschlägen geschützt werden sollte.

Das zugeschlagene hydraulische Bindemittel kann zu 95-100% aus Portlandzementklinker bestehen.

Hierzu sei noch ausgeführt, daß kaolinitische Tone relativ rasch mit hydraulischen Zuschlägen reagieren und zu chemischen Zementen führen, und zwar im wesentlichen nach dem Reaktionschema: Tonmineral + Bindemittel = Ca-Tonmineral + Neubildung. Das dabei entstehende Reaktionsprodukt stellt eine komplex zusammengesetzte Mischung aus Tonmineralien (hervorgegangen aus dem primären Gewässersediment und dem Tonzusatz), neugebildeten hydratisierten Ca/Al-Silikaten, Metallhydroxiden und organischen Komplexen dar und ist in sich chemisch stabil, wenn die Wasserzufuhr eingeschränkt oder völlig unterbunden wird.

Durch die Zugabe von Harnstoff wird insbesondere eine Bindewirkung von Cu und Zn erreicht, wobei der in den schädlichen organischen Bestandteilen der Gewässersedimente enthaltene Kohlenstoff mit dem Harnstoff bestimmte chemische Verbindungen eingeht, die zu einer Bindung der Schadstoffe sowie zu einer weiteren Verfestigung führen.

Erfindungsgemäß ist vorgesehen, daß der Harnstoff einen Amidstickstoffgehalt von 40 - 50%, insbesondere von 46% aufweisen kann. Obwohl grundsätzlich Harnstoffgranulat verwendet werden kann, ist es zweckmäßig, geprillten Harnstoff zu verwenden, der sich aufgrund seiner Feinheit schnell und gleichmäßig mit dem getrockneten Gewässersediment vermischt. Es kann vorgesehen sein, daß der Harnstoff einen Biuretgehalt von maximal 1,2% aufweist.

Erfindungsgemäß ist vorgesehen, daß das Ausgangsmaterial zu einem mineralischen Baustoff für erdbautechnische Zwecke zur Verwendung entweder unterhalb oder oberhalb des Wasserspiegels verarbeitet wird, d. h. das erfindungsgemäß verarbeitete Material kann insbesondere auch unter Wasser eingesetzt werden. Das Material kann als Baustoff für Auffüllungen unter Wasser, z.B. für Auffiillungen von Hafenbecken zur Herstellung von Industrieflächen, oder über Wasser, als Deichbau tragende oder dichtende Konstruktion oder für den temporären Hochwasserschutz eingesetzt werden. Weitere Verwendungsbereiche sind als Straßenunterbau tragende Konstruktion, als nicht tragende Auffüllung im Straßenbau, zum Bodenaustausch oder als Oberflächen- und Basisdichtung im Deponiebereich.

Die Erfindung betrifft weiterhin einen Baustoff für erdbautechnische Zwecke, hergestellt nach dem erfindungsgemäßen Verfahren und mit der angegebenen Korngrößenverteilung.

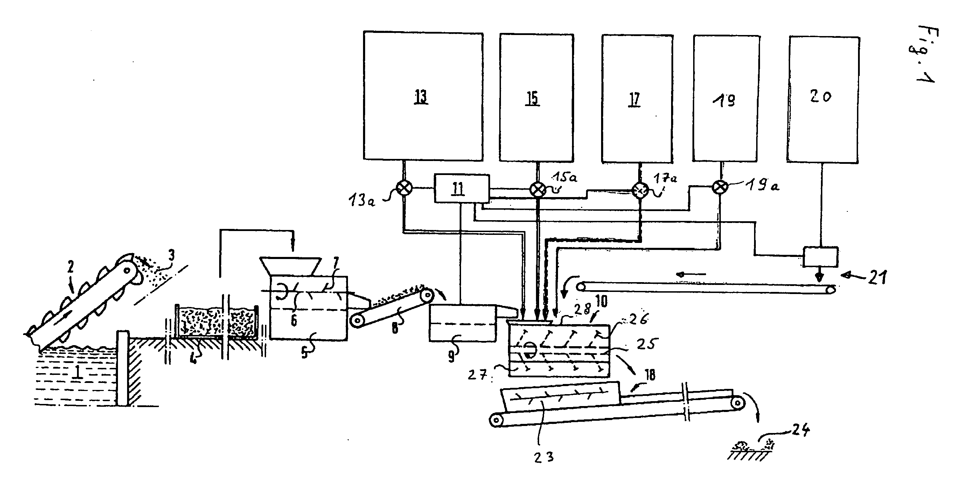

Das erfindungsgemäße Verfahren und eine Einrichtung zur Durchführung des Verfahrens werden nachstehend anhand einer Zeichnung weiter wie folgt erläutert, wobei
Fig. 1 eine schematisierte Darstellung einer Einrichtung zur Durchführung des Verfahrens zeigt,
Fig. 2 beispielhafte Korngrößenverteilungslinien ("Sieblinien") eines aufzubereitenden Gewässer- oder Bodenmaterials, zuzusetzender Gesteinskörnung und eines erfindungsgemäßen Baustoffs zeigt, und
Fig. 3 zwei Sieblinien, die die Bandbreite der möglichen Korngrößenverteilung des erfindungsgemäßen Baustoffs näherungsweise zeigen.

Die aus einem Gewässer 1 wie bspw. einem Hafenbecken, einer Fahrrinne od. dgl. mittels eines (Eimerketten-)Baggers 2 od. dgl. ausgebaggerten Gewässersedimente bzw. Böden 3 werden zunächst in geeigneter Weise einem Trockenfeld 4 zugeführt und dort auf natürliche Weise (insbesondere durch Verdunstung) auf einen Wassergehalt (bezogen auf das Trockengewicht der Sedimente 3) von etwa 50 - 70 % gebracht.

Im Falle der Aufbereitung von Böden wird ein Mindestwassergehalt sichergestellt, der gewährleistet, daß eine Verarbeitung mit den Zusatzstoffen gemäß der Erfindung erfolgen kann. Erforderlichenfalls wird zu trockenes Material befeuchtet.

Nachdem das Aufbereitungsmaterial den vorgegebenen Wassergehalt erreicht hat, wird es einem Shredder 5 zugeführt, der mit (wenigstens) einer in der Zeichnung lediglich mit einer strichpunktierten Linie angedeuteten Welle 6 versehen ist, auf welcher messerartige Zerkleinerungselemente 7 angeordnet sind, welche die entwässerten Gewässersedimente 3 (vor-) zerkleinern, dabei (vor-)homogenisieren und zugleich belüften.

Das entwässerte, zerkleinerte, belüftete und damit auch homogenisierte aufzubereitende Ausgangsmaterial gelangt danach mittels eines Förderers 8 zu einer Wiegeeinrichtung 9, bei welcher es sich im Hinblick auf den kontinuierlich angestrebten Aufbereitungsbetrieb um eine Bandwaage od.dgl. handelt, und wird von der Wiegeeinrichtung 9 in einen Doppelwellen-Zwangsmischer 10 gefördert.

Zugleich gelangen von der Wiegeeinrichtung 9 (elektrische) Signale, welche die zeitliche Menge des dem Mischer 10 zugeführten Sedimentmaterials angeben, zu einer Steuereinheit 11, welche diese (Mengen-)Signale nicht nur u.a. registriert, sondern auch rechnerisch verarbeitet und ihrerseits Steuersignale an eine Auslaßeinrichtung 13a in der Art einer Zellenschleuse od.dgl. weitergibt, die einem Vorratsbehälter 13 für kaolinitisches Tonmehl nachgeordnet ist und von der Steuereinheit 11 so gesteuert wird, daß dem Mischer 10 bzw. dem ihm zugeführten Gewässersedimentmaterial 3 jeweils kontinuierlich eine bestimmte Menge kaolinitischen Tonmehls zugegeben wird, und zwar bei dem dargestellten Ausführungsbeispiel 2% kaolinitisches Tonmehl (bezogen auf die Trockenmasse der Gewässersedimente), wobei diese Menge, die zwischen 2 und 10% liegen kann, im vorliegenden Fall ausreicht, weil die Gewässersedimente relativ stark entwässert worden sind, so daß der Wassergehalt etwa bei 50% liegt.

Außerdem steuert die Steuereinheit 11 eine Auslaßeinrichtung 15a eines Vorratsbehälters 15, in dem sich hydraulisches Bindemittel befindet, wobei den Gewässersedimenten 3 im Mischer 10 - gleichsam als "Starter" zur alsbaldigen Erwirkung einer ausreichenden Materialfestigkeit nach Aufbereitung - 25% Bindemittel (bezogen auf das Gewicht der Sedimentstrockenmasse) zugegeben wird.

Die Steuereinheit 11 steht weiterhin mit einer Auslaßeinrichtung 17a eines Vorratsbehälters 17 in Funktionsverbindung, in dem sich organophiler Bentonit befindet, und mit einer Auslaßeinrichtung 19a eines Vorratsbehälters 19, in dem sich granulierter oder geprillter Harnstoff befindet, welche den aufzubereitenden Gewässersedimenten 3 sowie dem kaolinitischen Tonmehl und dem Bindemittel gesteuert bzw. dosiert zugegeben werden können, und zwar je nach Beschaffenheit des Aufbereitungsgutes einerseits und dessen Bestimmungszweck andererseits in einer Menge zwischen ca. 0,1 - 0,5% bzw. 1 - 5% (wiederum bezogen auf das Trockengewicht der Gewässersedimente).

Es sei noch darauf verwiesen, daß das den aufzubereitenden Gewässersedimenten 3 aus dem Vorratsbehälter 13 dosiert zugeführte kaolinitsche Tonmehl bei einer Mahlfeinheit bis ca. 1,5 mm etwa 70% Kornanteil im Bereich bis 0,002 mm enthält.

Die dem aufzubereitenden Ausgangsmaterial weiterhin zuzusetzende Gesteinskörnung wird aus einem weiteren Vorratsbehälter 20 und eine durch die Steuereinheit 11 gesteuerte Dosier-und Fördereinrichtung 21 dem Mischer 10 zugeführt.

Die zuzusetzende Gesteinskörnung kann im Rahmen der Erfindung eine Korngrößenverteilung ("Sieblinie") innerhalb einer weiten Bandbreite aufweisen, damit sich im Ergebnis eine erfindungsgemäße Korngrößenverteilung ergibt, wie sie in Anspruch 1 festgelegt ist. Fig. 2 zeigt mit Kurve 2 eine beispielhafte Korngrößenverteilung, wie sie als Ergebnis der Aufbereitung in dem Baustoff nach Mischung des aufzubereitenden Gewässer- oder Bodenmaterials mit einer bestimmten Gesteinskörnung erhalten wird.

Selbstverständlich kann die zuzusetzende Gesteinskörnung aus einer Mischung von Gesteinskörnungen mit unterschiedlichem Größtkorn bestehen.

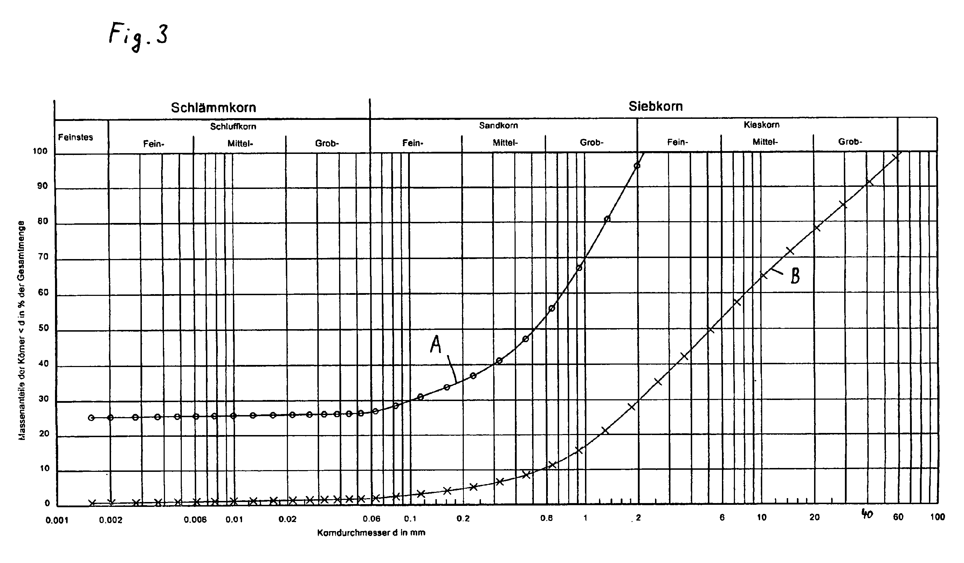

Fig. 2 zeigt für einen solchen Fall beispielhaft, wie sich die Zugabe von etwa 25 Gew.% (bezogen auf das Trockengewicht des aufzubereitenden Materials) Gesteinskörnung, gemischt aus 5 bis 10% einer Gesteinskörnung mit Größtkorn 16 mm (Kurve 4) und 90 bis 95% einer Gesteinskörnung mit Größtkorn 8 mm (Kurve 3), zu einem Sediment- bzw. Bodenmaterial mit der dargestellten relativ feinkörnigen Zusammensetzung (Kurve 1) auswirkt. Nach der Mischung erhält man einen Baustoff mit der dargestellten Körnungslinie (Kurve 2), die etwa in der Mitte des durch die Erfindung insgesamt abgedeckten Bereichs möglicher Korngrößenverteilungen liegt, wie er in Fig. 3 veranschaulicht ist, und dem Baustoff die angestrebten mechanischen Eigenschaften verleiht.

Fig. 3 zeigt näherungsweise den Korngrößenverteilungsbereich, innerhalb dessen der erfindungsgemäße Baustoff liegen kann, nämlich etwa zwischen den dargestellten Sieblinien A und B.

Aus dem Mischer 10 gelangt das im wesentlichen fertig aufbereitete Gut, das von einem weiteren Shredder 23 homogenisiert wird, über einen Förderer 18 zu einer Zwischenlagerstelle 24, wird dort einen Tag witterungsgeschützt zwischengelagert und sodann als Baustoff weiterverwendet.

Dabei sei noch darauf verwiesen, daß die an den beiden Wellen 25 des Mischers 10 angeordneten Schaufeln 26 während des Betriebes (die beiden Wellen 25, 25 liegen horizontal nebeneinander) so ineinandergreifen, daß sie gegenseitig gleichsam in der Art von Abstreifern eine Selbstreinigungswirkung entfalten.

Weiterhin sei darauf verweisen, daß der Aufbereitungsprozeß keineswegs kontinuierlich durchgeführt werden muß. Vielmehr kann es sogar zweckmäßig sein, ihn diskontinuierlich durchzuführen, und zwar insbesondere im Hinblick auf die angestrebte innige und homogene Vermischung der einzelnen Materialkomponenten im Mischer 10 sowie die nachfolgend erforderliche Entleerung. Bei einer diskontinuierlichen Arbeitsweise kann der Boden 27 des im wesentlichen zylindrischen Mischergehäuses 28 über einen Bogenwinkel von 120° geöffnet werden, so daß sich im Vergleich zu bekannten Doppelwellen-Zwangsmischern eine etwa vierfach so große Auslaßöffnung ergibt und eine problemlose Entleerung möglich ist. Mögliche Inhomogenitäten werden durch den nachgeschalteten Shredder 23 beseitigt.

Wie bereits weiter oben angedeutet worden ist, sind zahlreiche weitere Modifikationen sowohl verfahrensmäßig als auch einrichtungsmäßig möglich. So kann bspw. ein Silikat wie insbesondere industrielle Fällungskieselsäure als "Starter" zugegeben werden, und zwar zweckmäßigerweise ebenfalls in den Mischer 10, und zwar vorzugsweise bei diskontinuierlichem Betrieb, um eine sehr homogene Mischung herstellen zu können.

Durch das speziell zusammengesetzte hydraulische Bindemittel ist der hergestellte Baustoff auch über einen langen Zeitraum verarbeitbar. Das Material kann dadurch kontinuierlich produziert, zwischengelagert und jederzeit verarbeitet werden. Das Material kann als Baustoff verwendet werden für Auffiillungen über oder unter Wasser, für tragende und/oder dichtende Konstruktion im Deichbau, für tragende Konstruktionen im Straßenunterbau, als Auffüllung, nicht tragend, im Straßenbau, als Bodenaustausch oder Oberflächen- und Basisdichtungen zum Deponiebau. Der erfindungsgemäße Baustoff bleibt dauerhaft verarbeitbar und kann ein-und ausgebaut und wiederverwendet werden.

Bei Verwendung des erfindungsgemäß aufbereiteten Materials unter Wasser, z.B. als Auffiillung unter Wasser, bspw. mittels Greifern, hat es sich als zweckmäßig herausgestellt, wenn das Material unmittelbar nach dem Mischen mit den erfindungsgemäßen Zuschlagstoffen verarbeitet wird, d.h. unter Wasser eingebracht wird, am besten innerhalb von weniger als sechs Stunden nach dem Mischen, damit eine Verfestigung unter Wasser stattfindet.

### Bezugszeichenliste

- 1: Gewässer
- 2: Bagger
- 3: Gewässersedimente
- 4: Trockenfeld
- 5: Shredder
- 6: Shredderwelle
- 7: Zerkleinerungselemente
- 8: Förderer
- 9: Wiegeeinrichtung
- 10: Mischer
- 11: Steuereinheit
- 13: Vorratsbehälter
- 13a: Auslaßeinrichtung (von 13)
- 15: Vorratsbehälter
- 15a: Auslaßeinrichtung (von 15)
- 17: Vorratsbehälter
- 17a: Auslaßeinrichtung (von 17)
- 18: Förderer
- 19: Vorratsbehälter
- 19a: Auslaßeinrichtung (von 19)
- 20: Vorratsbehälter
- 21: Dosier- und Fördereinrichtung
- 23: Shredder
- 24: Zwischenlagerstelle
- 25: Welle
- 26: Schaufel
- 27: Boden
- 28: Mischergehäuse

## Patentansprüche

1. Verfahren zum Aufbereiten von kontaminiertem mineralischen Gewässersediment- oder Bodenmaterial (3) zu einem mineralischen Baustoff für erdbautechnische Zwecke, wobei das Material auf einen Wassergehalt von 50 - 70%, bezogen auf sein Trockengewicht, gebracht und homogen zerkleinert wird, und das zerkleinerte Material mit, bezogen auf sein Trockengewicht, 2 - 10% Tonmehl, Harnstoff, und 2- 30% hydraulischem Bindemittel und Gesteinskörnung homogen vermischt (10) wird, **dadurch gekennzeichnet dass** 0,1-0,5% organophiler Bentonit und Harnstoff in einer konzentration von 1-5% himzugefügt werden und der Baustoff eine Korngrößenverteilung aufweist, die innerhalb eines Sieblinienbands mit folgenden Massenanteilen liegt: 0,5% bis 26% bis 0,002 mm Korngröße; 0,7% bis 26% bis 0,006 mm Korngröße; 0,9% bis 27% bis 0,02 mm Korngröße; 1% bis 28% bis 0,06 mm Korngröße; 4% bis 40% bis 0,2 mm Korngröße; 6% bis 60% bis 0,6 mm Korngröße; 15% bis 75% bis 1 mm Korngröße; 25% bis 100% bis 2 mm Korngröße; 40% bis 100% bis 4 mm Korngröße; 45% bis 100% bis 6 mm Korngröße; 55% bis 100% bis 10 mm Korngröße; 75% bis 100% bis 20 mm Korngröße; 90% bis 100% bis 40 mm; 98% bis 100% bis 60 mm Korngröße.

2. Verfahren nach Anspruch 1, **dadurch gekennzeichnet, daß** 20 - 40 Gew.% Gesteinkörnung zugegeben werden.

3. Verfahren nach Anspruch 1 oder 2, **dadurch gekennzeichnet, daß** die Gesteinkömung eine Korngrößenverteilung aufweist, die innerhalb eines Sieblinienbands mit folgenden Massenanteilen liegt: 0% bis 1% bis 2 mm Korngröße; 0% bis 12% bis 3 mm Korngröße; 0% bis 35% bis 4 mm Korngröße; 0% bis 90% bis 5 mm Korngröße; 0 bis 96% bis 6 mm Korngröße; 0,5% bis 97% bis 8 mm Korngröße; 5% bis 100% bis 10 10 mm Korngröße, 95% bis 100% bis 16 mm Korngröße; 99% bis 100% bis 20 mm Korngröße.

4. Verfahren nach Anspruch 1, **dadurch gekennzeichnet, daß** die Gesteinskörnung Rundkorn, Brechkorn oder Recyclingmaterial enthält.

5. Verfahren nach Anspruch 1 oder 2, **dadurch gekennzeichnet, daß** die Gesteinskörnung abgestuft ist und 90 - 95% Körnung 2/8 mm und 5 - 10% Körnung 8/16 mm enthält.

6. Verfahren nach einem der vorangehenden Ansprüche, **dadurch gekennzeichnet, daß** das Material mit 2% Tonmehl, 0,2% organophilem Bentonit, 2% Harnstoff, 25% hydraulischem Bindemittel und 25% Gesteinskörnung vermischt wird.

7. Verfahren nach einem der vorangehenden Ansprüche, **dadurch gekennzeichnet, daß** Gewässersedimente mit einem Anteil von maximal 50 Gew.-% Sand verarbeitet werden.

8. Verfahren nach einem der vorangehenden Ansprüche, **dadurch gekennzeichnet, daß** das Material vor und nach dem Vermischen belüftet und homogenisiert wird.

9. Verfahren nach einem der vorangehenden Ansprüche, **dadurch gekennzeichnet, daß** das Tonmehl zu 10 - 75% aus Kaolinit und zu 5 - 25% aus Quarzit besteht.

10. Verfahren nach einem der vorangehenden Ansprüche, **dadurch gekennzeichnet, daß** das Tonmehl eine Mahlfeinheit bis ca. 1,5 mm aufweist.

11. Verfahren nach einem der vorangehenden Ansprüche, **gekennzeichnet durch** ein Tonmehl mit mindestens ca. 70% Kornanteil bis 0,002 mm.

12. Verfahren nach einem der vorangehenden Ansprüche, **dadurch gekennzeichnet, daß** die Mischung vor einer Weiterverarbeitung als Baustoff beim Einsatz unter Wasser innerhalb weniger als sechs Stunden nach dem Mischen unter Wasser eingebracht wird.

13. Verfahren nach einem der vorangehenden Ansprüche, **dadurch gekennzeichnet, dass** das aufbereitete Material mittels Greifern als Auffüllung unter Wasser eingesetzt wird.

14. Verfahren nach einem der vorangehenden Ansprüche, **dadurch gekennzeichnet, daß** das hydraulische Bindemittel 95-100 Gew.-% Portlandzementklinker aufweist.

15. Verfahren nach einem der vorangehenden Ansprüche, **dadurch gekennzeichnet, daß** der Harnstoff einen Amidstickstoffgehalt von 40 - 50%, insbesondere von 46% aufweist.

16. Verfahren nach einem der vorangehenden Ansprüche, **dadurch gekennzeichnet, daß** der Harnstoff als Granulat zugesetzt wird oder geprillt ist.

17. Verfahren nach einem der vorangehenden Ansprüche, **dadurch gekennzeichnet, daß** der Harnstoff einen Biuretgehalt von maximal 1,2% aufweist.

18. Verfahren nach einem der vorangehenden Ansprüche, **dadurch gekennzeichnet, daß** das Material zu einem mineralischen Baustoff für erdbautechnische Zwecke unterhalb oder oberhalb des Wasserspiegels verarbeitet wird.

19. Verfahren nach einem der vorangehenden Ansprüche, **dadurch gekennzeichnet, daß** das Material als Baustoff für Auffüllungen unter oder über Wasser, für Deichbau tragende oder dichtende Konstruktionen, als Straßenunterbau tragende Konstruktion oder zum Bodenaustausch verwendet wird.

## Claims

1. A method for the preparation of contaminated mineral aquatic sediment- or soil material (3) to form a mineral building material for earth-working and soil engineering purposes, where the material is dewatered to a water content not exceeding 50 - 70% of its dry weight and homogeneously comminuted, and the resulting comminuted material is homogeneously mixed (10) with, in terms of its dry weight, 2 - 10% powdered clay, urea and 2 - 30% hydraulic binder and aggregate, **characterised in that** 0.1 - 0.5% organophilic bentonite and urea are also added in a concentration of 1 - 5% and that the building material has a grain size distribution which lies within a grading curve range with the following mass fractions: 0.5% to 26% up to 0.002 mm grain size; 0.7% to 26% up to 0.006 mm grain size; 0.9% to 27% up to 0.02 mm grain size; 1% to 28% up to 0.06 mm grain size; 4% to 40% up to 0.2 mm grain size; 6% to 60% up to 0.6 mm grain size; 15% to 75% up to 1 mm grain size; 25% to 100% up to 2 mm grain size; 40% to 100% up to 4 mm grain size; 45% to 100% up to 6 mm grain size; 55% to 100% up to 10 mm grain size; 75% to 100% up to 20 mm grain size; 90% to 100% up to 40 mm grain size; 98% to 100% up to 60 mm grain size.

2. A method in accordance with Claim 1, **characterised in that** 20 - 40 wt % aggregate are added.

3. A method in accordance with Claim 1 or Claim 2, **characterised in that** the aggregate has a grain size distribution which lies within a grading curve range with the following mass fractions: 0% to 1% up to 2 mm grain size; 0% to 12% up to 3 mm grain size; 0% to 35% up to 4 mm grain size; 0% to 90% up to 5 mm grain size; 0% to 96% up to 6 mm grain size; 0.5% to 97% up to 8 mm grain size; 5% to 100% up to 10 mm grain size; 95% to 100% up to 16 mm grain size; 99% to 100% up to 20 mm grain size.

4. A method in accordance with Claim 1, **characterised in that** the aggregate contains round grains, crushed stone or recycling material.

5. A method in accordance with Claim 1 or Claim 2, **characterised in that** the aggregate is graded and contains 90 - 95% of grain size 2/8 mm and 5 - 10% of grain size 8/16 mm.

6. A method in accordance with one of the preceding Claims, **characterised in that** the material is mixed with 2% powdered clay, 0.2% organophilic bentonite, 2% urea, 25% hydraulic binder and 25% aggregate.

7. A method in accordance with one of the preceding Claims, **characterised in that** aquatic sediments are worked with a proportion of sand not exceeding 50 wt %.

8. A method in accordance with one of the preceding Claims, **characterised in that** the material is aerated and homogenised both before and after mixing.

9. A method in accordance with one of the preceding Claims, **characterised in that** the powdered clay consists of 10 - 75% kaolinite and 5 - 25% quartzite.

10. A method in accordance with one of the preceding Claims, **characterised in that** the powdered clay has a grinding fineness of up to approximately 1.5 mm.

11. A method in accordance with one of the preceding Claims, **characterised by** the use of powdered clay in which not less than approximately 70% of the grain content has a particle size up to 0.002 mm.

12. A method in accordance with one of the preceding Claims, **characterised in that**, in cases where it is to be deployed under water, the resulting mixture is, prior to further working as a building material, placed under water within less than six hours of mixing.

13. A method in accordance with one of the preceding Claims, **characterised in that** the prepared material is employed for filling in under water, where it is laid with the aid of grab buckets.

14. A method in accordance with one of the preceding Claims, **characterised in that** the hydraulic binder comprises 95 - 100 wt % Portland cement clinker.

15. A method in accordance with one of the preceding Claims, **characterised in that** the urea has an amide nitrogen content of 40 - 50% and in particular 46%.

16. A method in accordance with one of the preceding Claims, **characterised in that** the urea is added as granulate or is prilled.

17. A method in accordance with one of the preceding Claims, **characterised in that** the urea has a biuret content not exceeding 1.2%.

18. A method in accordance with one of the preceding Claims, **characterised in that** the material is worked to form a mineral building material for earth-working and soil engineering purposes below or above the water table.

19. A method in accordance with one of the preceding Claims, **characterised in that** the resulting material is used as a building material for filling in below or above water, for load-bearing or sealing elements in dam structures, for load-bearing structures in road foundations or for soil replacement.

## Revendications

1. Procédé de préparation d'un sédiment aquatique minéral contaminé - ou d'un matériau de sol (3) afin de former un matériau de construction minéral pour des objectifs de travail de la terre et d'ingénierie du sol, où le matériau est essoré jusqu'à une teneur en eau ne dépassant pas 50 à 70% de son poids sec et réduit en poudre de façon homogène, et le matériau réduit en poudre résultant est mélangé de façon homogène (10) avec, en termes de son poids sec, 2 à 10% d'argile en poudre, d'urée et 2 à 30% de liant hydraulique et d'agrégat, **caractérisé en ce que** 0,1 à 0,5% de bentonite organophile et d'urée sont également ajoutés selon une concentration de 1 à 5% et que le matériau du bâtiment a une distribution granulométrique qui se situe dans la plage de la courbe granulométrique avec les fractions massiques suivantes : 0,5% à 26% jusqu'à une granulométrie de 0,002 mm maxi. ; 0,7% à 26% jusqu'à une granulométrie de 0,006 mm maxi. ; 0,9% à 27% jusqu'à une granulométrie de 0,02 mm maxi. ; 1% à 28% jusqu'à une granulométrie de 0,06 mm maxi ; 4% à 40% jusqu'à une granulométrie de 0,2 mm maxi. ; 6% à 60% jusqu'à une granulométrie de 0,6 mm maxi ; 15% à 75% jusqu'à une granulométrie de 1 mm maxi. ; 25% à 100% jusqu'à une granulométries de 2 mm maxi. ; 40% à 100% jusqu'à une granulométrie de 4 mm maxi. ; 45% à 100% jusqu'à une granulométrie de 6 mm maxi. ; 55% à 100% up to 10 mm grain size; 75% to 100% up to 20 mm grain size; 90% to 100% jusqu'à une granulométrie de 40 mm maxi. ; 98% à 100% jusqu'à une granulométrie de 60 mm maxi.

2. Procédé selon la Revendication 1, **caractérisé en ce que** 20 à 40 % en poids de l'agrégat sont ajoutés.

3. Procédé selon la Revendication 1 ou la Revendication 2, **caractérisé en ce que** l'agrégat a une distribution granulométrique qui se situe dans une plage de courbe granulométrique ayant les fractions massiques suivantes : 0% à 1% jusqu'à une granulométrie de 2 mm maxi. ; 0% à 12% jusqu'à une granulométrie de 3 mm maxi. ; 0% à 35% jusqu'à une granulométrie de 4 mm maxi. ; 0% à 90% jusqu'à une granulométrie de 5 mm maxi. ; 0% à 96% jusqu'à une granulométrie de 6 mm maxi. ; 0,5% à 97% jusqu'à une granulométrie de 8 mm maxi ; 5% à 100% jusqu'à une granulométrie de 10 mm maxi. ; 95% à 100% jusqu'à une granulométrie de 16 mm maxi. ; 99% à 100% jusqu'à une granulométrie de 20 mm maxi.

4. Procédé selon la Revendication 1, **caractérisé en ce que** l'agrégat contient des grains ronds, de la roche concassée ou un matériau de recyclage.

5. Procédé selon la Revendication 1 ou la Revendication 2, **caractérisé en ce que** l'agrégat est classé et contient 90 à 95% d'une granulométrie de 2/8 mm et 5 à 10% d'une granulométrie de 8/16 mm.

6. Procédé selon l'une quelconque des revendications précédentes, **caractérisé en ce que** le matériau est mélangé avec 2% d'argile en poudre, 0,2% de bentonite organophile, 2% d'urée, 25% de liant hydraulique et 25% d'agrégat.

7. Procédé selon l'une quelconque des revendications précédentes, **caractérisé en ce que** les sédiiments aquatiques sont travaillés avec une proportion de sable ne dépassant pas 50 % en poids.

8. Procédé selon l'une quelconque des revendications précédentes, **caractérisé en ce que** le matériau est aéré et homogénéisé avant et après le mélange.

9. Procédé selon l'une quelconque des revendications précédentes, **caractérisé en ce que** l'argile en poudre est constituée de 10 à 75% de kaolinite et de 5 à 25% de quartzite.

10. Procédé selon l'une quelconque des revendications précédentes, **caractérisé en ce que** l'argile en poudre possède une finesse de broyage de jusqu'à environ 1,5 mm.

11. Procédé selon l'une quelconque des revendications précédentes, **caractérisé par** l'utilisation d'argile en poudre dans laquelle pas moins d'environ 70% de la teneur en grain a une distribution granulométrique de jusqu'à 0,002 mm.

12. Procédé selon l'une quelconque des revendications précédentes, **caractérisé en ce que**, dans les cas où il doit être déployé sous de l'eau, le mélange résultant est, avant tout travail supplémentaire en tant que matériau de construction, placé sous l'eau dans moins de six heures de son mélange.

13. Procédé selon l'une quelconque des revendications précédentes, **caractérisé en ce que** le matériau préparé est utilisé pour remplir de l'eau sous-marine au moyen de bennes preneuses.

14. Procédé selon l'une quelconque des revendications précédentes, **caractérisé en ce que** le liant hydraulique renferme 95 à 100 % en poids de clinker de ciment Portland.

15. Procédé selon l'une quelconque des revendications précédentes, **caractérisé en ce que** l'urée a une teneur en azote amide de 40 à 50% et notamment de 46%.

16. Procédé selon l'une quelconque des revendications précédentes, **caractérisé en ce que** l'urée est ajoutée en tant que granulé ou est grelonée.

17. Procédé selon l'une quelconque des revendications précédentes, **caractérisé en ce que** l'urée a une teneur en biuret ne dépassant pas 1,2%.

18. Procédé selon l'une quelconque des revendications précédentes, **caractérisé en ce que** le matériau est travaillé afin de former un matériau de construction minéral pour des objectifs de travail de la terre et d'ingénierie du sol en-dessous ou au-dessus de la nappe phréatique.

19. Procédé selon l'une quelconque des revendications précédentes, **caractérisé en ce que** le matériau résultant est utilisé en tant que matériau de construction pour un remplissage en-dessous ou au-dessus de l'eau, pour des éléments porteurs de charge ou de scellage dans les structures de digues, pour des structures porteuses de charges dans les fondations de chaussées ou pour le remplacement du sol.
